# EUROPEAN PATENT SPECIFICATION

(11) **EP 2 322 822 B1**
(45) Date of publication and mention of the grant of the patent: **07.03.2012**
(21) Application number: 09425460.4
(22) Date of filing: 13.11.2009
(51) Int. Cl.: F16H 3/00, F16H 63/18, B60K 6/36

(54) **Motor-vehicle double-clutch transmission with gear shift device comprising a rotary drum and motor-vehicle hybrid propulsion system including such a transmission**
Doppelkupplungsgetriebe eines Kraftfahrzeugs mit Gangschaltungsvorrichtung, die eine Drehtrommel umfasst, und Hybridantriebssystem eines Kraftfahrzeugs, das ein solches Getriebe beinhaltet
Transmission à double embrayage de véhicule à moteur avec dispositif de levier de vitesse comportant un tambour rotatif et système de propulsion hybride de véhicule à moteur incluant une telle transmission

(43) Date of publication of application: 18.05.2011
(60) Divisional application: 11170473.0
(73) Proprietor: C.R.F. Società Consortile per Azioni, 10043 Orbassano (Torino) (IT)
(72) Inventor: Pesola, Fabio , C.R.F. S.C.A., 10043 Orbassano (Torino) (IT); Pregnolato, Gianluigi , C.R.F. S.C.A., 10043 Orbassano (Torino) (IT); Piazza, Andrea , C.R.F. S.C.A., 10043 Orbassano (Torino) (IT); Garabello, Marco , C.R.F. S.C.A., 10043 Orbassano (Torino) (IT); Pastorello, Valter , C.R.F. S.C.A., 10043 Orbassano (Torino) (IT)
(74) Representative: Rondano, Davide

(56) References cited:
- EP-A- 1 731 794
- EP-A2- 1 266 788
- DE-A1- 3 037 990
- DE-A1- 10 011 271
- US-A1- 2005 139 035
- US-A1- 2007 209 461
- US-A1- 2009 025 498
- BERGER R ET AL: "ESG - Elektrisches Schaltgetriebe", ATZ AUTOMOBILTECHNISCHE ZEITSCHRIFT, VIEWEG PUBLISHING, WIESBADEN, DE, vol. 107, no. 6, 1 June 2005 (2005-06-01), pages 488-493,495, XP001519133, ISSN: 0001-2785

## Description

The present invention relates to a motor-vehicle hybrid propulsion system comprising an internal combustion engine, a double-clutch transmission and an electric machine connected to the double-clutch transmission to operate alternatively as a motor and as a generator, according to the preamble of claim 1.

A motor-vehicle hybrid propulsion system of this type is known from the article "ESG-Elektrisches Schaltgetriebe" in the ATZ, vol.107, no.6, 1 June 2005, pages 488-493,495.

It is an object of the present invention to provide a motor-vehicle double-clutch transmission which has better performances than the prior art and, in case of use in a hybrid propulsion system, allows the vehicle to run also in case of exhaustion of the batteries of the vehicle which supply the electric machine when this latter operates as a motor.

This and other objects are fully achieved according to the present invention by virtue of a motor-vehicle hybrid propulsion system having the characteristics set forth in the appended independent claim 1.

Further advantageous characteristics of the present invention are set forth in the dependent claims, the content of which is to be intended as integral and integrating part of the following description.

In short, the invention is based on the idea of providing a motor-vehicle double-clutch transmission of the above-specified type, in which the guide grooves on the outer cylindrical surface of the drum are shaped in such a manner that in one of the angular positions of the drum the engagement sleeves are positioned so as to engage at the same time the second gear and the reverse gear. In this way, since the second gear and the reverse gear are driven by two different primary shafts, namely the second primary shaft and the first primary shaft, respectively, parking manoeuvres in second gear and in reverse gear can be carried out in powershift mode, i.e. by keeping the two gears engaged at the same time and by controlling the transmission of the torque with either of those gears by means of the two friction clutches. Moreover, parking manoeuvres can be normally driven by the electric machine or, if required, for example in case of exhaustion of the batteries, also by the internal combustion engine.

Advantageously, the guide grooves on the outer cylindrical surface of the drum are shaped in such a manner that in the angular position of the drum immediately preceding (or following) the aforesaid position the engagement sleeves are positioned so as to engage the reverse gear only. Therefore, in case of breakage of the electric machine there is still the possibility of driving the vehicle in reverse gear by means of the internal combustion engine.

The characteristics and the advantages of the invention will become clear from the detailed description given here below purely by way of non-limiting example with reference to the appended drawings, in which:
Figure 1 is a schematic illustration which shows a mechanical gearbox with five forward gears and one reverse gear of a double-clutch transmission forming part of a motor-vehicle hybrid propulsion system according to a first embodiment of the present invention, as well as an electric machine connected to the gearbox;
Figure 2 is a schematic illustration which shows a mechanical gearbox with six forward gears and one reverse gear of a double-clutch transmission forming part of a motor-vehicle hybrid propulsion system according to a second embodiment of the present invention, as well as an electric machine connected to the gearbox;
Figure 3 is a schematic illustration which shows a mechanical gearbox with six forward gears and one reverse gear of a double-clutch transmission forming part of a motor-vehicle hybrid propulsion system according to a third embodiment of the present invention, as well as an electric machine connected to the gearbox;
Figure 4 is a schematic illustration which shows a mechanical gearbox with six forward gears and one reverse gear of a double-clutch transmission forming part of a motor-vehicle hybrid propulsion system according to a fourth embodiment of the present invention, as well as an electric machine connected to the gearbox;
Figure 5 is a section view of the gearbox of Figure 2, with the associated electric machine;
Figure 6 is a further partial section view of the gearbox of Figure 2, which shows on an enlarged scale a shift fork associated to an engagement sleeve controlling the engagement of the sixth gear;
Figure 7 is a perspective view of a gear shift device associated to the gearbox of Figure 2;
Figure 8 is a schematic illustration which shows the development in a plane of the guide grooves of the drum of the gear shift device of Figure 7, indicating the positions taken by the engagement sleeves in each of the angular positions of the drum; and
Figure 9 is a schematic illustration which shows the development in a plane of the guide grooves of the drum of the gear shift device associated to the gearbox of Figure 3, indicating the positions taken by the engagement sleeves in each of the angular positions of the drum.

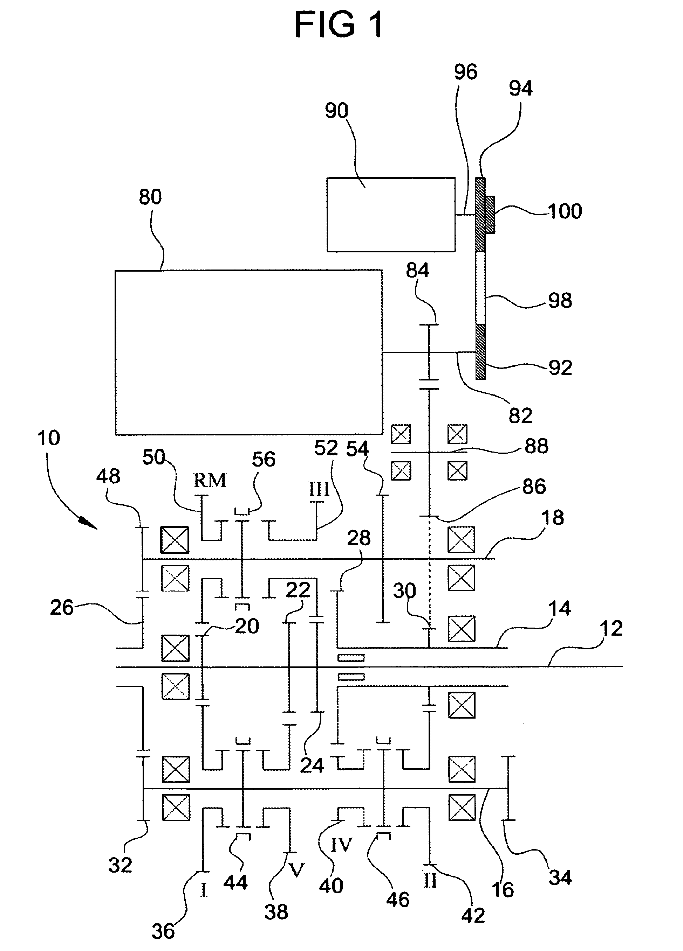

With reference first to Figure 1, numerals 10 and 80 indicate, respectively, a mechanical gearbox and an electric machine forming part of a hybrid propulsion system for a motor vehicle also comprising an internal combustion engine (not shown) and a clutch unit (also not shown) forming with the gearbox 10 a double-clutch transmission. In the embodiment illustrated in Figure 1, the gearbox 10 is a gearbox with five forward gears and one reverse gear and comprises:
a first primary shaft 12 torsionally connected to a crankshaft of the internal combustion engine by means of a first friction clutch of the clutch unit;
a second primary shaft 14 torsionally connected to the crankshaft of the internal combustion engine of the motor vehicle by means of a second friction clutch of the clutch unit, the second primary shaft 14 being arranged coaxially with the first primary shaft 12, and in particular, according to the illustrated example, outside the first primary shaft 12; and
a secondary shaft 16 and a lay shaft 18 both arranged parallel to the two primary shafts 12 and 14.

The first primary shaft 12 (inner primary shaft) projects axially from the second primary shaft 14 (outer primary shaft) and carries, in order from the side axially opposite to the clutch unit of the transmission (left-hand side relative to the observer of Figure 1) to the side axially facing the clutch unit of the transmission (right-hand side relative to the observer of Figure 1), a gearwheel 20 acting as driving gearwheel for both the gear train of first gear and the gear train of reverse gear, a gearwheel 22 acting as driving gearwheel for the gear train of fifth gear and a gearwheel 24 acting as driving gearwheel for the gear train of third gear. The first primary shaft 12 also carries, at the left-hand end relative to the observer of Figure 1, an idle gearwheel 26 acting as intermediate gearwheel of a gear train which cinematically connects the lay shaft 18 to the secondary shaft 16, as will be further explained in the following part of the description. The second primary shaft 14 carries, in order from left to right relative to the observer of Figure 1, a gearwheel 28 acting as driving gearwheel for the gear train of fourth gear and a gearwheel 30 acting as driving gearwheel for the gear train of second gear. The driving gearwheels 20, 22, 24, 28 and 30 mentioned above are made as fixed gearwheels, i.e. as gearwheels permanently fast for rotation with the respective shafts.

The secondary shaft 16 carries, at the end axially opposite to the clutch unit, a gearwheel 32 which is made as a fixed gearwheel and permanently meshes with the idle gearwheel 26 of the first primary shaft 12 and, at the end axially facing the clutch unit, a final reduction pinion 34 intended to mesh permanently with an input gearwheel or ring gear of a differential gear of the motor vehicle (not shown). The secondary shaft 16 also carries between the gearwheel 32 and the final reduction pinion 34, in order from left to right relative to the observer of Figure 1, a gearwheel 36 permanently meshing with the driving gearwheel 20 and acting as driven gearwheel of the gear train of first gear, a gearwheel 38 permanently meshing with the driving gearwheel 22 and acting as driven gearwheel of the gear train of fifth gear, a gearwheels 40 permanently meshing with the driving gearwheel 28 and acting as driven gearwheel of the gear train of fourth gear, and a gearwheel 42 permanently meshing with the driving gearwheel 30 and acting as driven gearwheel of the gear train of second gear. The driven gearwheels 36, 38, 40 and 42 mentioned above are made as idle gearwheels and are selectively connectable for rotation with the secondary shaft 16 by means of a pair of sliding engagement sleeves 44 and 46. More precisely, the engagement sleeve 44 is interposed between the gearwheels 36 and 38 and is selectively movable to the left or to the right, through an intermediate neutral position, to connect the gearwheel 36 or the gearwheel 38, respectively, for rotation with the secondary shaft 16, thereby engaging the first gear or the fifth gear, respectively, whereas the sliding engagement sleeve 46 is interposed between the gearwheels 40 and 42 and is selectively movable to the left or to the right, through an intermediate neutral position, to connect the gearwheel 40 or the gearwheel 42, respectively, for rotation with the secondary shaft 16, thereby engaging the fourth gear or the second gear, respectively.

The lay shaft 18 carries, at the end axially opposite to the clutch unit, a gearwheel 48 which is made as fixed gearwheel and permanently meshes with the idle gearwheel 26 of the first primary shaft 12, in such a manner that the lay shaft 18 is permanently cinematically connected to the secondary shaft 16 by means of the gear train formed by the gearwheel 48 which is fast for rotation with the lay shaft 18, by the idle gearwheel 26 which is coaxial to the first primary shaft 12 and by the gearwheel 32 which is fast for rotation with the secondary shaft 16. The lay shaft 18 also carries, in order from left to right relative to the observer of Figure 1, a gearwheel 50 permanently meshing with the gearwheel 36 carried by the secondary shaft 16 and acting as intermediate gearwheel of the gear train of reverse gear, a gearwheel 52 permanently meshing with the driving gearwheel 24 carried by the first primary shaft 12 and acting as intermediate gearwheel of the gear train of third gear and a gearwheel 54 acting as parking gearwheel. The intermediate gearwheels 50 and 52 mentioned above are made as idle gearwheels, whereas the parking gearwheel 54 is made as fixed gearwheel. A sliding engagement sleeve 56 is interposed between the gearwheels 50 and 52 and is selectively movable to the left or to the right, through an intermediate neutral position, to connect the gearwheel 50 or the gearwheel 52, respectively, for rotation with the lay shaft 18, thereby engaging the reverse gear or the third gear, respectively.

Therefore, the transmission of the torque in reverse gear and in at least one of the forward gears (in the present case the third gear) takes place via the lay shaft 18. More specifically, with the reverse gear engaged (engagement sleeve 56 in the left-hand shift position), the torque is transmitted from the first primary shaft 12 to the lay shaft 18 via the gear train formed by the gearwheel 20 carried by the primary shaft 12 and acting as driving gearwheel, by the gearwheel 36 carried by the secondary shaft 16 and acting as idle gearwheel, and by the gearwheel 50 carried by the lay shaft 18 and acting as driven gearwheel, and then from the lay shaft 18 to the secondary shaft 16 via the gear train formed by the gearwheel 48 carried by the lay shaft 18 and acting as driving gearwheel, by the gearwheel 26 carried by the first primary shaft 12 and acting as idle gearwheel, and by the gearwheel 32 carried by the secondary shaft 16 and acting as driven gearwheel. With the third gear engaged (engagement sleeve 56 in the right-hand shift position), the torque is transmitted from the first primary shaft 12 to the lay shaft 18 via the gear train formed by the gearwheel 24 carried by the primary shaft 12 and acting as driving gearwheel, and by the gearwheel 52 carried by the lay shaft 18 and acting as driven gearwheel, and then from the lay shaft 18 to the secondary shaft 16 via the above-described gear train formed by the gearwheels 48, 26 and 32.

The gearbox described above with reference to Figure 1 enables to carry out all the single gear shifts in so-called powershift mode, i.e. with the old and new gears engaged at the same time, apart from the gear shift from the first gear to the reverse gear and vice versa, since all the driving gearwheels associated to the odd gears (first, third and fifth gears) are carried by the one primary shaft (in the present case the first primary shaft 12), whereas all the driving gearwheels associated to the even gears (second and fourth gears) are carried by the other primary shaft (in the present case the second primary shaft 14).

The electric machine 80 is arranged parallel to the gearbox, i.e. with the axis of an output shaft 82 thereof arranged parallel to the axes of the shafts 12, 14, 16 and 18 of the gearbox, and is permanently cinematically connected to either of the primary shafts 12, 14 (in the proposed example to the second primary shaft 14 associated to the even gears) of the gearbox 10 via a gear train consisting of a pinion 84 carried by the output shaft 82 of the electric machine 80, of an intermediate gearwheel 86 carried by a special intermediate shaft 88 (supported by the case of the gearbox 10) and permanently meshing with the pinion 84, and of one of the gearwheels carried by the aforesaid primary shaft 12, 14 of the gearbox (in the example of Figure 1 of the gearwheel 30 acting as driving gearwheel for the gear train of second gear). By virtue of the direct connection with either of the two primary shafts of the gearbox, the electric machine 80 is able to perform, in addition to the usual functions of traction (generation of mechanical power for the wheels of the vehicle taking energy from the high-voltage batteries of the vehicle) and of generation (generation of electrical power for the high-voltage batteries of the vehicle taking energy from the recovery of the kinetic energy of the vehicle or from the operation of the internal combustion engine when the vehicle is still), also the functions of alternator and of starting motor, and hence makes it possible to avoid the use of additional alternator and starting motor.

Advantageously, the electric machine 80 is also connected to a compressor 90 of the air conditioner by means of a driving pulley 92 mounted on the output shaft 82 of the electric machine 80, a driven pulley 94 mounted on a drive shaft 96 of the compressor 90, a belt 98 wound on the two pulleys 92 and 94, and an electromagnetic clutch 100 associated to the driven pulley 94. The electric machine 80 is thus able to perform the additional function of generating mechanical power for the compressor 90 of the air conditioner, which is particularly useful as it allows the compressor of the air conditioner to operate also when the internal combustion engine is not running. The electric machine 80 and the compressor 90 of the air conditioner (in case of the compressor being connected to the electric machine) can thus be shifted from the side of the internal combustion engine to the side of the gearbox of the motor vehicle.

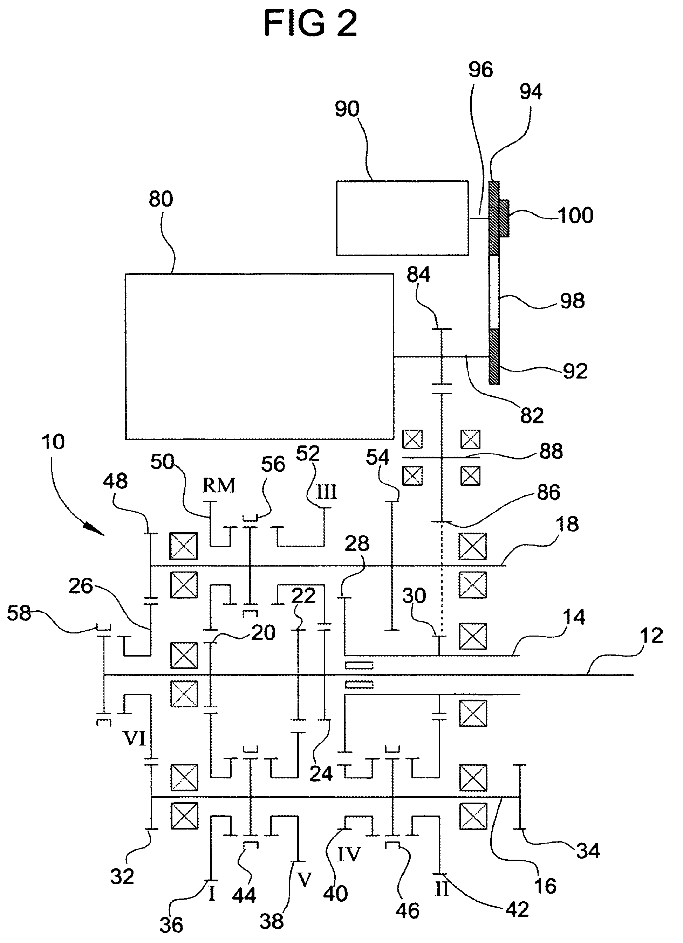

A further embodiment of the invention is illustrated in Figure 2, where parts and elements identical or similar to those of Figure 1 have been given the same reference numerals.

The gearbox shown in Figure 2 is a gearbox with six forward gears and one reverse gear which also comprises a pair of primary shafts 12 and 14, a secondary shaft 16 and a lay shaft 18. The arrangement of the gearwheels associated to the first five forward gears and to the reverse gear is identical to that of the gearbox of Figure 1, and therefore reference is made to the above detailed description of that gearbox. The sixth gear is obtained by adding a sliding engagement sleeve 58 associated to the gearwheel 26 to connect it for rotation with the first primary shaft 12. In this way, when the sliding engagement sleeve 58 is operated to connect the gearwheel 26 for rotation with the first primary shaft 12, the torque is transmitted directly from the first primary shaft 12 to the secondary shaft 16 via the gear train formed by the gearwheel 26 acting as driving gearwheel and by the gearwheel 32 acting as driven gearwheel.

The gearbox according to Figure 2 offers the same advantages mentioned above with reference to the gearbox of Figure 1, with the difference that in the present case the gear shift from the fifth to the sixth gear, and vice versa, is not allowed in powershift mode, but the gear shift from the sixth to the fourth or second gear during a kick-down manoeuvre is allowed in powershift mode.

As far as the electric machine 80 is concerned, the previous description relating to Figure 1 fully applies.

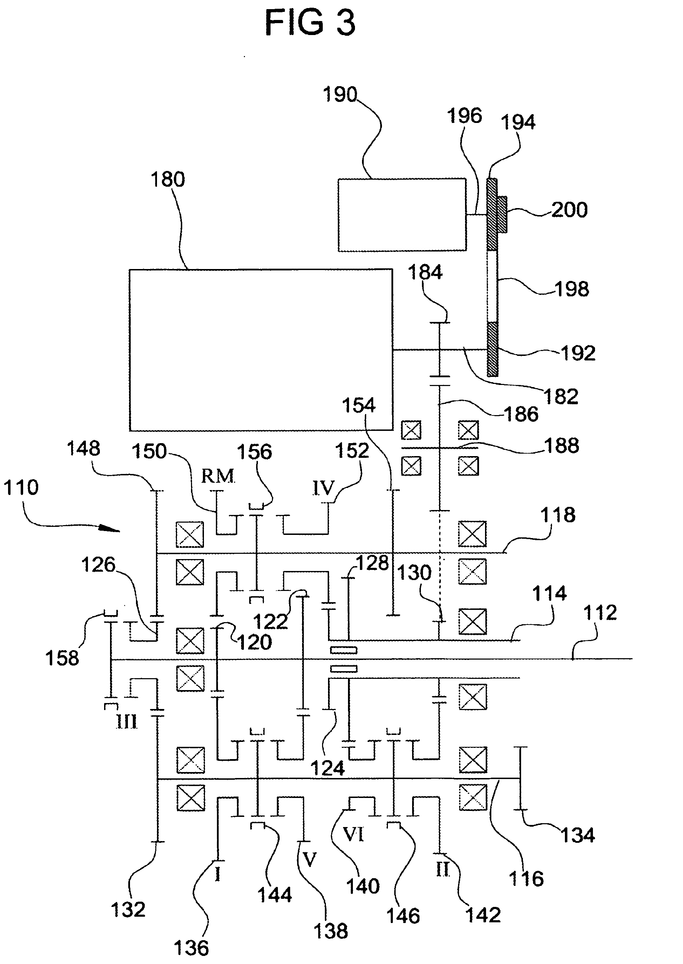

A further embodiment of the invention is illustrated in Figure 3, where parts and elements identical or similar to those of Figure 2 have been given the same reference numerals, increased by 100.

With reference to Figure 3, the gearbox is generally indicated 110 and also comprises a first primary shaft 112 (inner primary shaft), a second primary shaft 114 (outer primary shaft), a secondary shaft 116 and a lay shaft 118.

The first primary shaft 112 projects axially from the second primary shaft 114 and carries, in order from left to right relative to the observer of Figure 3, an idle gearwheel 126 acting both as intermediate gearwheel of a gear train which cinematically connects the lay shaft 118 to the secondary shaft 116, and as driving gearwheel for the gear train of third gear, a gearwheel 120 acting as driving gearwheel both for the gear train of first gear and for the gear train of reverse gear, and a gearwheel 122 acting as driving gearwheel for the gear train of fifth gear. The second primary shaft 114 carries, in order from left to right relative to the observer of Figure 3, a gearwheel 124 acting as driving gearwheel for the gear train of fourth gear, a gearwheel 128 acting as driving gearwheel for the gear train of sixth gear and a gearwheel 130 acting as driving gearwheel for the gear train of second gear. The above-mentioned driving gearwheels 120, 122, 124, 128 and 130 are made as fixed gearwheels, i.e. they are permanently fast for rotation with the respective shafts.

The secondary shaft 116 carries, at the end axially opposite to the clutch unit, a gearwheel 132 which is made as fixed gearwheel and permanently meshes with the idle gearwheel 126 of the first primary shaft 112 and, at the end axially facing the clutch unit, a final reduction pinion 134 intended to mesh permanently with an input gearwheel or ring gear of the differential gear of the motor vehicle (not shown). The secondary shaft 116 also carries, in order from left to right relative to the observer of Figure 3, between the gearwheel 132 and the final reduction pinion 134, a gearwheel 136 permanently meshing with the driving gearwheel 120 and acting as driven gearwheel of the gear train of first gear, a gearwheel 138 permanently meshing with the driving gearwheel 122 and acting as driven gearwheel of the gear train of fifth gear, a gearwheel 140 permanently meshing with the driving gearwheel 128 and acting as driven gearwheel of the gear train of sixth gear, and a gearwheel 142 permanently meshing with the driving gearwheel 130 and acting as driven gearwheel of the gear train of second gear. The above-mentioned driven gearwheels 136, 138, 140 and 142 are made as idle gearwheels and are selectively connectable for rotation with the secondary shaft 116 by means of a pair of sliding engagement sleeves 144 and 146. More specifically, the sliding engagement sleeve 144 is interposed between the gearwheels 136 and 138 and is selectively movable to the left or to the right to connect the gearwheel 136 or the gearwheel 138, respectively, for rotation with the secondary shaft 116, thereby engaging the first gear or the fifth gear, respectively, whereas the sliding engagement sleeve 146 is interposed between the gearwheels 140 and 142 and is selectively movable to the left or to the right to connect the gearwheel 140 or the gearwheel 142, respectively, for rotation with the secondary shaft 116, thereby engaging the sixth gear or the second gear, respectively.

The lay shaft 118 carries, at the end axially opposite to the clutch unit, a gearwheel 148 which is made as fixed gearwheel and permanently meshes with the idle gearwheel 126 of the first primary shaft 112, in such a manner that the lay shaft 118 is permanently cinematically connected with the secondary shaft 116 by means of the gear train formed by the gearwheel 148 which is fast for rotation with the lay shaft 118, by the idle gearwheel 126 which is coaxial with the first primary shaft 112 and by the gearwheel 132 which is fast for rotation with the secondary shaft 116. The lay shaft 118 also carries, in order from left to right relative to the observer of Figure 3, a gearwheel 150 permanently meshing with the gearwheel 136 carried by the secondary shaft 116 and acting as intermediate gearwheel of the gear train of reverse gear, a gearwheel 152 permanently meshing with the driving gearwheel 124 carried by the second primary shaft 114 and acting as intermediate gearwheel of the gear train of fourth gear and a gearwheel 154 acting as parking gearwheel. The above-mentioned intermediate gearwheels 150 and 152 are made as idle gearwheels, whereas the parking gearwheel 154 is made as fixed gearwheel. A sliding engagement sleeve 156 is interposed between the gearwheels 150 and 152 and is selectively movable to the left or to the right to connect the gearwheel 150 or the gearwheel 152, respectively, for rotation with the lay shaft 118, thereby engaging the reverse gear or the fourth gear, respectively.

With respect to the gearbox of Figure 2, the forward gear corresponding to the transmission of the torque via the lay shaft 118 is therefore the fourth gear, instead of the third gear. Moreover, the gear obtained by connecting the idle gearwheel 126 for rotation with the first primary shaft by means of the sliding engagement sleeve 158 is the third gear, instead of the sixth gear. Moreover, like the gearbox of Figure 1, also the gearbox of Figure 3 makes it possible to carry out all the single gear shifts in powershift mode, apart from the gear shift from the first gear to the reverse gear and vice versa, since all the driving gearwheels associated to the odd gears (first, third and fifth gears) are carried by one primary shaft (also in this case the first primary shaft 112), whereas all the driving gearwheels associated to the even gears (second, fourth and sixth gears) are carried by the other primary shaft (second primary shaft 114). Also the embodiment of Figure 3 offers the same advantages described above in terms of limited axial sizes of the gearbox and of reduced actuation forces of the parking device.

As far as the electric machine, indicated 180 in Figure 3, is concerned, the previous description relating to Figure 1 fully applies.

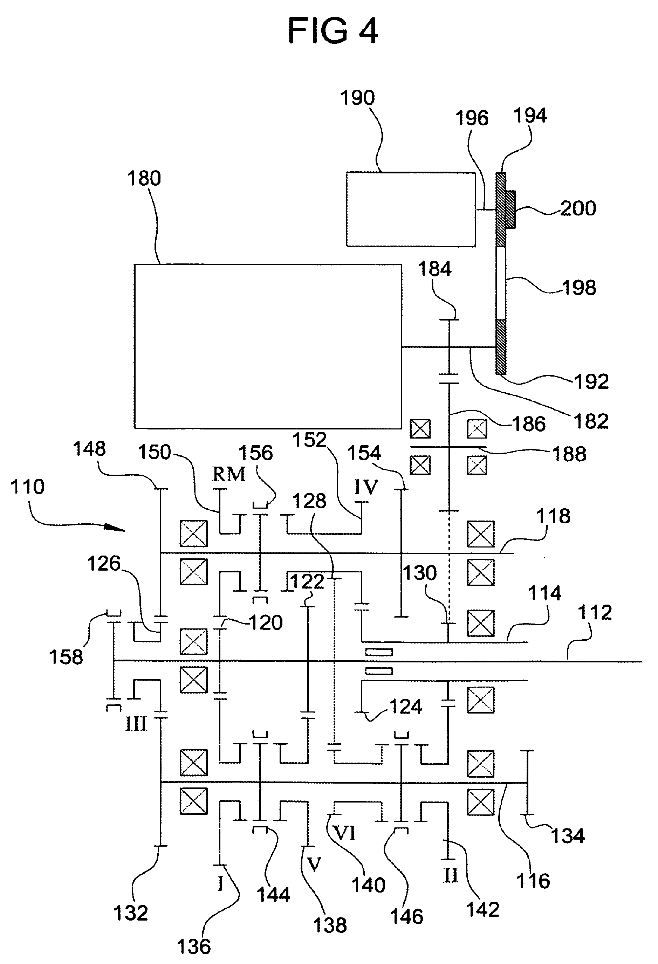

A further embodiment of the invention is illustrated in Figure 4, where parts and elements identical or similar to those of Figure 3 have been given the same reference numerals.

The gearbox of Figure 4 also comprises a pair of primary shafts 112 and 114, a secondary shaft 116 and a lay shaft 118 and has an arrangement of the gearwheels associated to the six forward gears and to the reverse gear which is identical to that of the gearbox of Figure 3, the only difference being that the driving gearwheel 128 permanently meshing with the driven gearwheel 140 carried by the secondary shaft 116 to implement the sixth gear is in this case carried by the first primary shaft 112, instead of the second primary shaft 114, and in particular on the right (according to the point of view of the observer of Figure 4) of the driving gearwheel 122. Accordingly, the gearbox according to Figure 4 does not allow to shift form the fifth gear to the sixth gear, and vice versa, in powershift mode, but allows anyway to shift from the sixth gear to the fourth or second gear in powershift mode during a kick-down manoeuvre.

As far as the electric machine, indicated 180 in Figure 4 as well, is concerned, the previous description relating to Figure 1 fully applies.

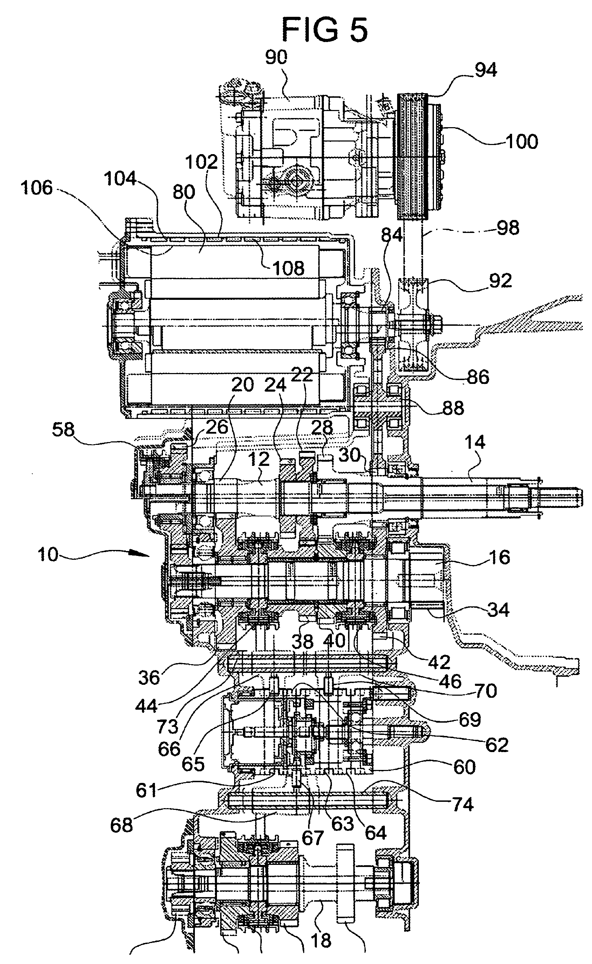

According to an aspect of the present invention, which may be provided for in each of the embodiments described above with reference to Figures 1 to 4, the electric machine is advantageously integrated in the gearbox. More specifically, with reference to Figure 5, where parts and elements identical or similar to those of Figure 2 have been given the same reference numerals, the electric machine 80 is inserted and fixed into a special seat 102 formed by the case of the gearbox, in such a manner that a spiral-shaped profile 104 of the cooling circuit of the electric machine formed on the outer surface of a stator 106 of the electric machine is closed on the radially outer side by an inner cylindrical surface 108 of the seat 102, the channels of the cooling circuit being therefore defined between the spiral-shaped profile 104 and the inner cylindrical surface 108.

The transmission of the motor-vehicle hybrid propulsion system according to the invention further comprises a gear shift device arranged to control sequentially the engagement of the gears by controlling the displacement of the engagement sleeves of the gearbox between the respective neutral and shift positions.

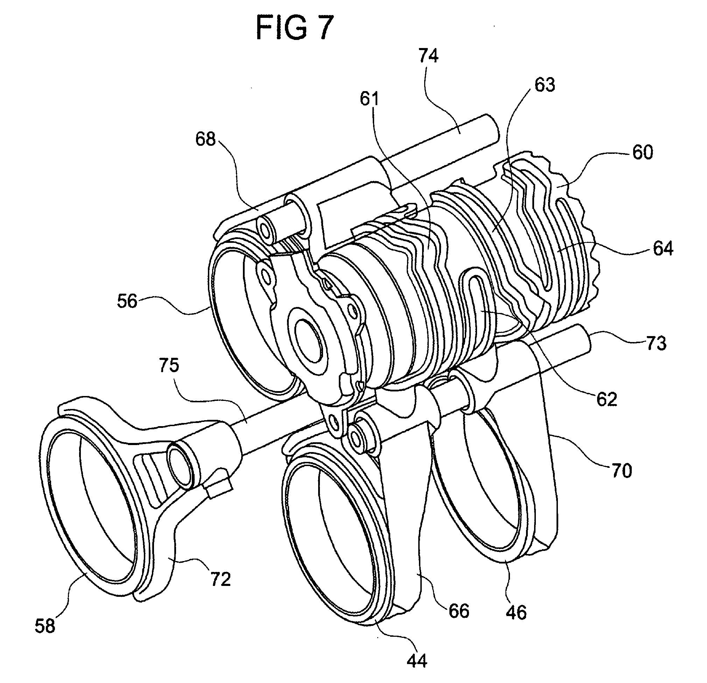

With reference in particular to Figures 5 to 7, the gear shift device will be described now in combination with the gearbox illustrated in Figures 2 and 5. As stated before, the gearbox of Figures 2 and 5 is a gearbox with six forward gears and one reverse gear, in which the gears are engaged by means of the four engagement sleeves 44, 46, 56 and 58 associated to the first and fifth gears, to the fourth and second gears, to the reverse and third gears, and finally to the sixth gear, respectively. More specifically, the engagement sleeve 44 can be displaced to the left and to the right, starting from a central neutral position, into a left-hand shift position in which it engages the first gear and into a right-hand shift position in which it engages the fifth gear, respectively, the engagement sleeve 46 can be displaced to the left and to the right, starting from a central neutral position, into a left-hand shift position in which it engages the fourth gear and into a right-hand shift position in which it engages the second gear, respectively, the engagement sleeve 56 can be displaced to the left and to the right, starting from a central neutral position, into a left-hand shift position in which it engages the reverse gear and into a right-hand shift position in which it engages the third gear, respectively, and finally the engagement sleeve 58 can be displaced to the right, starting from a central neutral position, into a right-hand shift position in which it engages the sixth gear.

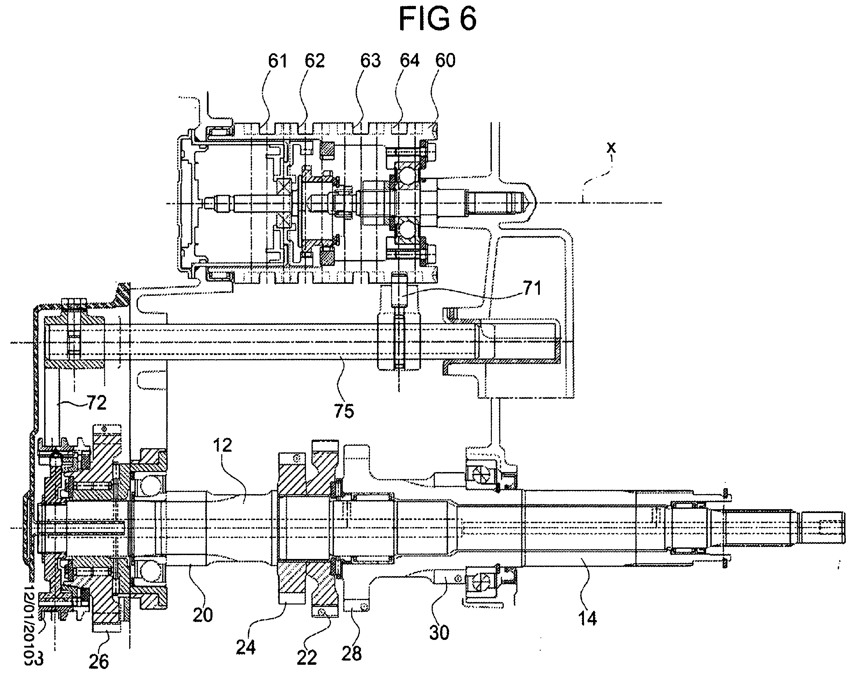

The gear shift device includes a rotary drum 60, whose axis of rotation (indicated X in Figure 6) coincides with the geometrical axis of the drum and is arranged parallel to the axes of the shafts 12, 14, 16 and 18 of the gearbox 10. Four guide grooves 61, 62, 63 and 64 are provided, in order from left to right relative to the observer of Figures 5 to 7, on the outer cylindrical surface of the drum 60. A stud 65 slidably engages in the guide groove 61 and is rigidly connected for axial translation (i.e. in a direction parallel to the above-defined axis X) with a shift fork 66, which in turn is rigidly connected for axial translation with the engagement sleeve 44 associated to the first and fifth gears. A stud 67 slidably engages in the guide groove 62 and is rigidly connected for axial translation with a shift fork 68, which in turn is rigidly connected for axial translation with the engagement sleeve 56 associated to the reverse and third gears. A stud 69 slidably engages in the guide groove 63 and is rigidly connected for axial translation with a shift fork 70, which in turn is rigidly connected for axial translation with the engagement sleeve 46 associated to the fourth and second gears. Finally, a stud 71 slidably engages in the guide groove 64 and is rigidly connected for axial translation with a shift fork 72, which in turn is rigidly connected for axial translation with the engagement sleeve 58 associated to the sixth gear. The shift forks 66 and 70 associated to the engagement sleeves 44 and 46 are slidably mounted along a stationary rod 73, while the shift fork 68 is slidably mounted along a stationary rod 74, the two stationary rods 73 and 74 being fixed to the case of the gearbox 10. The shift fork 72 associated to the engagement sleeve 58 is fixed to a sliding rod 75 supported by the case of the gearbox 10. It is however clear that the arrangement of the shift forks and of the respective rods may differ from the one described and illustrated herein.

The gear shift device further comprises an actuation unit (not shown) arranged to cause the drum 60 to rotate stepwise about the axis of rotation X among a plurality of angular positions each corresponding to predetermined positions of the engagement sleeves 44, 46, 56 and 58. The actuation unit includes, in per-se-known manner, an electric motor or a servo-assisted hydraulic device, if necessary coupled to a gear reduction unit.

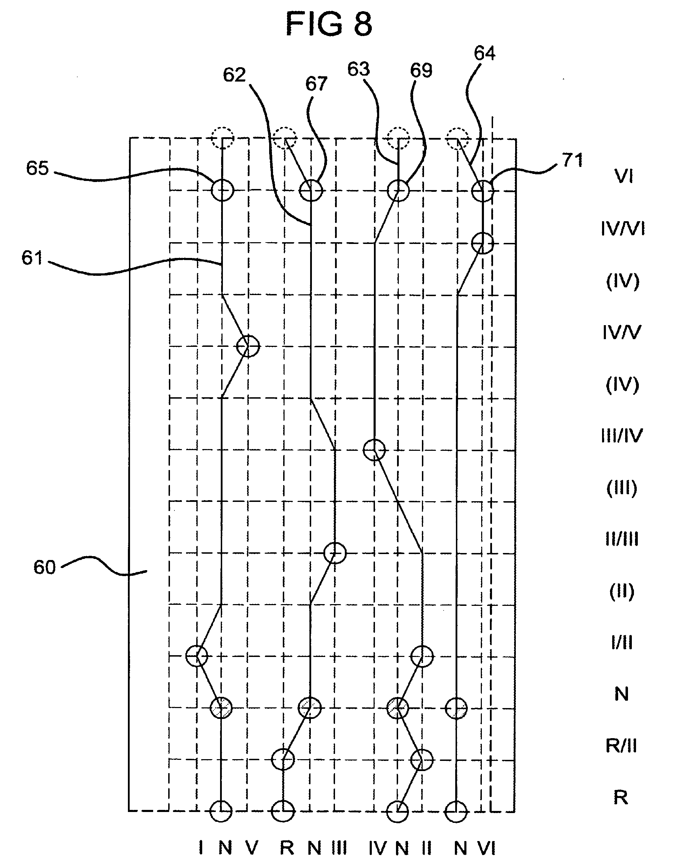

The guide grooves 61, 62, 63 and 64 of the drum 60 are suitably shaped in such a manner that they cause each time, as a result of the rotation of the drum, at least one of the studs 65, 67, 69 and 71, and hence at least one of the respective engagement sleeves 44, 56, 46 and 58, to move (axial translation) according to predetermined operating modes to engage or disengage each time one or more gears. In this connection, Figure 8 schematically shows the development in a plane of the guide grooves 61, 62, 63 and 64 of the drum 60 and the positions taken by the studs 65, 67, 69 and 71 (and hence by the engagement sleeves 44, 46, 56 and 58 operatively connected thereto) in each of the angular positions of the drum. The angular positions of the drum are indicated on the right side of the scheme of Figure 8 by the symbol of the engaged gear(s).

Starting from the position indicated N, in which all the engagement sleeves 44, 46, 56 and 58 are in the central neutral position, the drum takes in sequence the following angular positions in the direction towards the forward gears:
- an angular position (I/II) in which the engagement sleeve 44 associated to the stud 65 which slides in the guide groove 61 is in the shift position corresponding to the engagement of the first gear and the engagement sleeve 46 associated to the stud 69 which slides in the guide groove 63 is in the shift position corresponding to the engagement of the second gear, whereas the other two engagement sleeves 56 and 58 are in the central neutral position;
- an angular position (II/III) in which the engagement sleeve 56 associated to the stud 67 which slides in the guide groove 62 is in the shift position corresponding to the engagement of the third gear and the engagement sleeve 46 associated to the stud 69 which slides in the guide groove 63 is in the shift position corresponding to the engagement of the second gear, whereas the other two engagement sleeves 44 and 58 are in the central neutral position;
- an angular position (III/IV) in which the engagement sleeve 56 associated to the stud 67 which slides in the guide groove 62 is in the shift position corresponding to the engagement of the third gear and the engagement sleeve 46 associated to the stud 69 which slides in the guide groove 63 is in the shift position corresponding to the engagement of the fourth gear, whereas the other two engagement sleeves 44 and 58 are in the central neutral position;
- an angular position (IV/V) in which the engagement sleeve 44 associated to the stud 65 which slides in the guide groove 61 is in the shift position corresponding to the engagement of the fifth gear and the engagement sleeve 46 associated to the stud 69 which slides in the guide groove 63 is in the shift position corresponding to the engagement of the fourth gear, whereas the other two engagement sleeves 56 and 58 are in the central neutral position;
- an angular position (IV/VI) in which the engagement sleeve 46 associated to the stud 69 which slides in the guide groove 63 is in the shift position corresponding to the engagement of the fourth gear and the engagement sleeve 58 associated to the stud 71 which slides in the guide groove 64 is in the shift position corresponding to the engagement of the sixth gear, whereas the other two engagement sleeves 44 and 56 are in the central neutral position; and
- an angular position (VI) in which the engagement sleeve 58 associated to the stud 71 which slides in the guide groove 64 is in the shift position corresponding to the engagement of the sixth gear, whereas the other three engagement sleeves 44, 46 and 56 are in the central neutral position.

Between the angular position (I/II) and the angular position (II/III) an intermediate position (II) is provided in which the engagement sleeve 44 is moved into the central neutral position to disengage the first gear, whereas the engagement sleeve 46 remains in the shift position corresponding to the engagement of the second gear. Between the angular position (II/III) and the angular position (III/IV) an intermediate position (III) is provided in which the engagement sleeve 46 is moved into the central neutral position to disengage the second gear, whereas the engagement sleeve 56 remains in the shift position corresponding to the engagement of the third gear. Between the angular position (III/IV) and the angular position (IV/V) an intermediate position (IV) is provided in which the engagement sleeve 56 is moved into the central neutral position to disengage the third gear, whereas the engagement sleeve 46 remains in the shift position corresponding to the engagement of the fourth gear. Between the angular position (IV/V) and the angular position (IV/VI) an intermediate position (IV) is provided in which the engagement sleeve 44 is moved into the central neutral position to disengage the fifth gear, whereas the engagement sleeve 46 remains in the shift position corresponding to the engagement of the fourth gear.

Starting from position N, the drum takes in sequence the following angular positions in the direction towards the reverse gear:
- an angular position (R/II) in which the engagement sleeve 56 associated to the stud 67 which slides in the guide groove 62 is in the shift position corresponding to the engagement of the reverse gear and the engagement sleeve 46 associated to the stud 69 which slides in the guide groove 63 is in the shift position corresponding to the engagement of the second gear, whereas the other two engagement sleeves 44 and 58 are in the central neutral position; and
- an angular position (R) in which the engagement sleeve 56 associated to the stud 67 which slides in the guide groove 62 remains in the shift position corresponding to the engagement of the reverse gear, whereas the engagement sleeve 46 associated to the stud 69 which slides in the guide groove 63 is moved into the central neutral position to disengage the second gear, the other two engagement sleeves 44 and 58 remaining in the central neutral position.

Since the guide grooves of the drum are shaped in such a manner that in one of the angular positions of the drum the second gear and the reverse gear are engaged at the same time, parking manoeuvres can be performed in powershift mode. In fact, since the second gear and the reverse gear are driven by two different primary shafts, namely the second primary shaft 14 and the first primary shaft 12, respectively, parking manoeuvres can be performed keeping these two gears engaged at the same time and controlling the transmission of the torque in either of these gears by means of the two friction clutches. Moreover, since the electric machine permanently cinematically connected to the second primary shaft 14 (even gears), parking manoeuvres can be normally driven by the electric machine or, if necessary, for example in case of exhaustion of the batteries, also by the internal combustion engine.

Moreover, since the guide grooves of the drum are shaped in such a manner that in one of the angular positions of the drum only the reverse gear is engaged, it is possible to drive the vehicle in reverse gear by means of the internal combustion engine even in case of breakage of the electric machine.

Moreover, since the guide grooves of the drum are shaped in such a manner that in one of the angular positions of the drum the sixth gear (associated to the first primary shaft 12) and the fourth gear (associated to the second primary shaft 14) are engaged at the same time, it is possible for the electric machine to operate as a generator when the vehicle is running in sixth gear (motorway gear) to charge the batteries, as well as for the electric machine to be used as a booster. Moreover, the presence of a further angular position of the drum in which only the sixth gear is engaged makes it possible to disconnect the electric machine when the vehicle is running with the sixth gear engaged and the batteries are charged.

The above description relating to the gear shift device associated to the gearbox of Figure 2 applies to the gearbox of Figure 1 as well, the only difference being that in this case the engagement sleeve 58 associated to the sixth gear is omitted and therefore the corresponding stud 71 and the corresponding guide groove 64 are omitted.

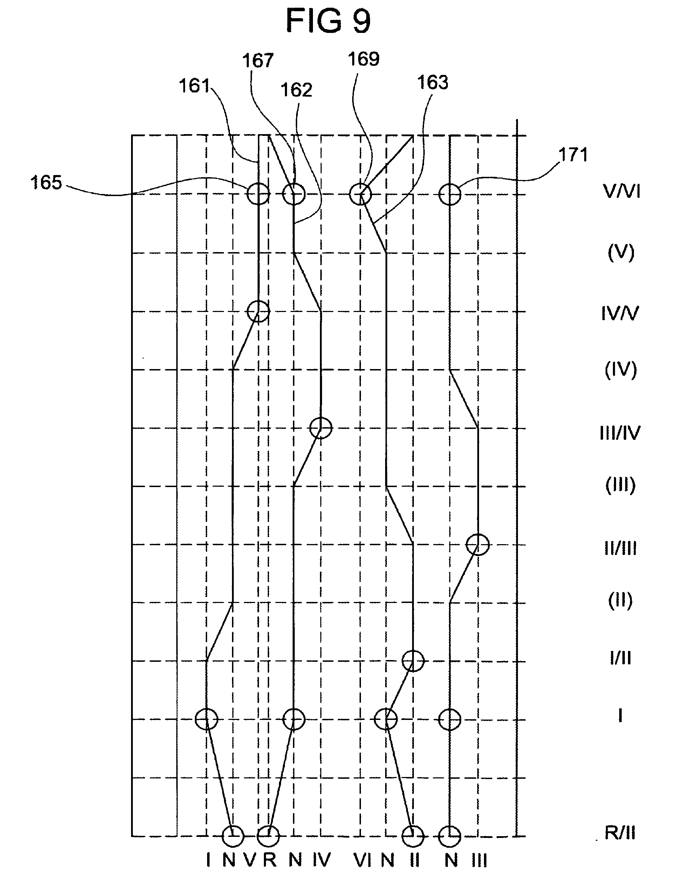

Figure 9, where parts and elements identical or similar to those of Figure 8 have been given the same reference numerals, increased by 100, schematically shows the development in a plane of the outer cylindrical surface of a rotary drum 160 forming part of the gear shift device associated to the gearbox of Figure 3. Four guide grooves 161, 162, 163 and 164 are provided on the outer cylindrical surface of the drum 160, in order from left to right relative to the observer of Figure 9. A stud 165 slidably engages in the guide groove 161 and is rigidly connected for axial translation with the engagement sleeve 144 associated to the first and fifth gears. A stud 167 slidably engages in the guide groove 162 and is rigidly connected for axial translation with the engagement sleeve 156 associated to the reverse and fourth gears. A stud 169 slidably engages in the guide groove 163 and is rigidly connected for axial translation with the engagement sleeve 146 associated to the sixth and second gears. Finally, a stud 171 slidably engages in the guide groove 164 and is rigidly connected for axial translation with the engagement sleeve 158 associated to the third gear.

Like the gear shift device described above with reference to Figures 6 to 8, also in this case an actuation unit (not shown) is provided to cause the drum 160 to rotate stepwise about its own axis of rotation among a plurality of angular positions each corresponding to predetermined positions of the engagement sleeves 144, 146, 156 and 158.

The guide grooves 161, 162, 163 and 164 of the drum 160 are suitably shaped in such a manner that they cause each time, as a result of the rotation of the drum, at least one of the studs 165, 167, 169 and 171, and hence at least one of the respective engagement sleeves 144, 156, 146 and 158, to move (axial translation) according to predetermined operating modes to engage or disengage each time one or more gears. In this connection, with reference to Figure 9, the drum 160 is arranged to take in sequence the following angular positions:
- an angular position (R/II) in which the engagement sleeve 156 associated to the stud 167 which slides in the guide groove 162 is in the shift position corresponding to the engagement of the reverse gear and the engagement sleeve 146 associated to the stud 169 which slides in the guide groove 163 is in the shift position corresponding to the engagement of the second gear, whereas the other two engagement sleeves 144 and 158 are in the central neutral position;
- an angular position (I) in which the engagement sleeve 144 associated to the stud 165 which slides in the guide groove 161 is in the shift position corresponding to the engagement of the first gear, whereas the other three engagement sleeves 146, 156 and 158 are in the central neutral position;
- an angular position (I/II) in which the engagement sleeve 144 associated to the stud 165 which slides in the guide groove 161 is in the shift position corresponding to the engagement of the first gear and the engagement sleeve 146 associated to the stud 169 which slides in the guide groove 163 is in the shift position corresponding to the engagement of the second gear, whereas the other two engagement sleeves 156 and 158 are in the central neutral position;
- an angular position (II/III) in which the engagement sleeve 146 associated to the stud 169 which slides in the guide groove 163 is in the shift position corresponding to the engagement of the second gear and the engagement sleeve 158 associated to the stud 171 which slides in the guide groove 164 is in the shift position corresponding to the engagement of the third gear, whereas the other two engagement sleeves 144 and 156 are in the central neutral position;
- an angular position (III/IV) in which the engagement sleeve 156 associated to the stud 167 which slides in the guide groove 162 is in the shift position corresponding to the engagement of the fourth gear and the engagement sleeve 158 associated to the stud 171 which slides in the guide groove 164 is in the shift position corresponding to the engagement of the third gear, whereas the other two engagement sleeves 144 e146 are in the central neutral position;
- an angular position (IVN) in which the engagement sleeve 144 associated to the stud 165 which slides in the guide groove 161 is in the shift position corresponding to the engagement of the fifth gear and the engagement sleeve 156 associated to the stud 167 which slides in the guide groove 162 is in the shift position corresponding to the engagement of the fourth gear, whereas the other two engagement sleeves 146 and 158 are in the central neutral position; and
- an angular position (V/VI) in which the engagement sleeve 144 associated to the stud 165 which slides in the guide groove 161 is in the shift position corresponding to the engagement of the fifth gear and the engagement sleeve 146 associated to the stud 169 which slides in the guide groove 163 is in the shift position corresponding to the engagement of the sixth gear, whereas the other two engagement sleeves 156 and 158 are in the central neutral position.

Between the angular position (I/II) and the angular position (II/III) an intermediate position (II) is provided in which the engagement sleeve 144 is moved into the central neutral position to disengage the first gear, whereas the engagement sleeve 146 remains in the shift position corresponding to the engagement of the second gear. Between the angular position (II/III) and the angular position (III/IV) an intermediate position (III) is provided in which the engagement sleeve 146 is moved into the central neutral position to disengage the second gear, whereas the engagement sleeve 158 remains in the shift position corresponding to the engagement of the third gear. Between the angular position (III/IV) and the angular position (IV/V) an intermediate position (IV) is provide in which the engagement sleeve 158 is moved into the central neutral position to disengage the third gear, whereas the engagement sleeve 156 remains in the shift position corresponding to the engagement of the fourth gear. Between the angular position (IVN) and the angular position (V/VI) an intermediate position (V) is provided in which the engagement sleeve 156 is moved into the central neutral position to disengage the fourth gear, whereas the engagement sleeve 144 remains in the shift position corresponding to the engagement of the fifth gear.

Therefore, also in this case the same advantage described above with reference to Figure 8 and relating to the possibility of engaging the second gear and the reverse gear at the same time is obtained.

A gear shift device comprising a drum with guide grooves shaped in such a manner that in one of the angular positions of the drum the second gear and the reverse gear are engaged at the same time can obviously be used also in combination with the gearbox described above with reference to Figure 4.

Naturally, the principle of the invention remaining unchanged, the embodiments and manufacturing details may be widely varied with respect to those described and illustrated purely by way of non-limiting example.

## Claims

1. Motor-vehicle hybrid propulsion system, comprising an internal combustion engine, an electric machine (80; 180) and a double-clutch transmission, wherein the double-clutch transmission comprises a mechanical gearbox (10; 110) with at least five forward gears (I, II, III, IV, V; I, II, III, IV, V, VI) and one reverse gear (R), wherein the gearbox (10; 110) comprises a first primary shaft (12; 112) carrying driving gearwheels (20, 22, 24; 120, 122) associated to the odd gears (I, III, V) and to the reverse gear (R), a second primary shaft (14; 114) coaxial with the first primary shaft (12; 112) and carrying driving gearwheels (28, 30; 124, 130) associated at least to the second gear (II) and to the fourth gear (IV), and at least one secondary shaft (16, 18; 116, 118) carrying a plurality of idle driven gearwheels (36, 38, 40, 42, 50, 52; 136, 138, 140, 142, 150, 152) directly or indirectly meshing with the driving gearwheels (20, 22, 24, 28, 30; 120, 122, 124, 130) carried by the two primary shafts (12, 14; 112; 114), the electric machine (80; 180) being permanently cinematically connected to the second primary shaft (14; 114), wherein the gearbox (10; 110) is also provided with a gear shift device comprising a plurality of sliding engagement sleeves (44, 46, 56; 44, 46, 56, 58; 144, 146, 156, 158), each arranged to connect each time a driven gearwheel (36, 38, 40, 42, 50, 52; 136, 138, 140, 142, 150, 152) corresponding to a given gear for rotation with the respective secondary shaft (16, 18; 116, 118), and a corresponding plurality of sliding shift forks (66, 68, 70, 72), each arranged to cause a respective engagement sleeve (44, 46, 56; 44, 46, 56, 144, 146, 156, 158) to slide between a neutral position and at least one shift position, **characterized in that** the gear shift device further comprises a rotary drum (60; 160) having on its outer cylindrical surface a corresponding plurality of guide grooves (61, 62, 63, 64; 161, 162, 163, 164) in each of which a respective stud (65, 67, 69, 71; 165, 167, 169, 171) slidably engages, which stud is rigidly connected for translation with a respective shift fork (66, 68, 70, 72) in the sliding direction of this latter, and an actuation unit arranged to cause the drum (60; 160) to rotate stepwise among a plurality of angular positions (R, R/II, N, I/II, II/III, III/IV, IV/V, IV/VI, VI; R/II, I, I/II, II/III, III/IV, IV/V, V/VI) each corresponding to predetermined positions of the engagement sleeves (44, 46, 56; 44, 46, 56, 58; 144, 146, 156, 158), and
**in that** the guide grooves (61, 62, 63, 64; 161, 162, 163, 164) of the drum (60; 160) are shaped in such a manner that in a first angular position (R/II) of said plurality of angular positions (R, R/II, N, /II, II/III, III/IV, IV/V, IV/VI, VI; R/II, I, I/II, II/III, III/IV, IV/V, V/VI) the engagement sleeves (44, 46, 56; 44, 46, 56, 58; 144, 146, 156, 158) are positioned so as to engage at the same time the second gear (II) and the reverse gear (R), and in a second angular position (R) of said plurality of angular positions (R, R/II, N, I/II, II/III, III/IV, IV/V, IV/VI, VI; R/II, I, I/II, II/III, III/IV, IV/V, V/VI) immediately adjacent to the first angular position (R/II) the engagement sleeves (44, 46, 56; 44, 46, 56, 58) are positioned so as to engage only the reverse gear (R).

2. Motor-vehicle hybrid propulsion system according to claim 1, wherein the gearbox (10) has five forward gears (I, II, III, IV, V) and one reverse gear (R) and wherein said plurality of engagement sleeves (44, 46, 56) comprises a first engagement sleeve (44) arranged to engage selectively the first gear (I) or the fifth gear (V), a second engagement sleeve (46) arranged to engage selectively the second gear (II) or the fourth gear (IV), and a third engagement sleeve (56) arranged to engage selectively the third gear (III) or the reverse gear (R).

3. Motor-vehicle hybrid propulsion system according to claim 2, wherein the gearbox (10) has also a sixth forward gear (VI) and wherein said plurality of engagement sleeves (44, 46, 56, 58) further comprises a fourth engagement sleeve (58) arranged to engage the sixth gear (VI).

4. Motor-vehicle hybrid propulsion system according to claim 1, wherein the gearbox (10) has six forward gears (I, II, III, IV, V, VI) and one reverse gear (R) and wherein said plurality of engagement sleeves (144, 146, 156, 158) comprises a first engagement sleeve (144) arranged to engage selectively the first gear (I) or the fifth gear (V), a second engagement sleeve (146) arranged to engage selectively the second gear (II) or the sixth gear (VI), a third engagement sleeve (156) arranged to engage selectively the fourth gear (IV) or the reverse gear (R), and a fourth engagement sleeve (158) arranged to engage the third gear (III).

5. Motor-vehicle hybrid propulsion system according to any of the preceding claims, wherein the electric machine (80; 180) is permanently cinematically connected to the second primary shaft (14; 114) via a gear train (84, 86, 30; 184, 186, 130) including a pinion (84; 184) carried by an output shaft (82; 182) of the electric machine (80; 180), at least one intermediate gearwheel (86; 186) and one (30; 130) of the driving gearwheels (28, 30; 124, 130) carried by the second primary shaft (14; 114).

6. Motor-vehicle hybrid propulsion system according to claim 5, wherein the driving gearwheel (30; 130) of said gear train (84, 86, 30; 184, 186, 130) is associated to the second gear (II).

## Patentansprüche

1. Kraftfahrzeug-Hybridantriebssystem, aufweisend eine interne Verbrennungskraftmaschine, eine elektrische Maschine (80; 180) und eine Doppelkupplungskraftübertragung,
wobei die Doppelkupplungskraftübertragung aufweist ein mechanisches Getriebe (10; 110) mit wenigstens fünf Vorwärtsgängen (I, II, III, IV, V; I, II, III, IV, V, VI) und einem Rückwärtsgang (R), wobei das Getriebe (10; 110) aufweist eine erste primäre Welle (12; 112), die den ungeraden Gängen (I, III, V) und dem Rückwärtsgang (R) zugeordnete Antriebszahnräder (20, 22, 24; 120, 122) trägt, eine zweite primäre Welle (14; 114), die zur ersten primären Welle (12; 112) koaxial ist und wenigstens dem zweiten Gang (II) und dem vierten Gang (IV) zugeordnete Antriebszahnräder (28, 30; 124, 130) trägt, und wenigstens eine sekundäre Welle (16, 18, 116, 118), die eine Anzahl von mit den von den zwei primären Wellen (12, 14; 112, 114) getragenen Antriebszahnrädern (20, 22, 24, 28, 30; 120, 122, 124, 130) direkt oder indirekt kämmende, im Leerlauf betriebene Zahnräder (36, 38, 40, 42, 50, 52; 136, 138, 140, 142, 150, 152) trägt, wobei die elektrische Maschine (80; 180) permanent kinematisch mit der zweiten primären Welle (14; 114) verbunden ist, wobei das Getriebe (10; 110) auch mit einer Gangschalteinrichtung ausgestattet ist, die aufweist eine Anzahl verschiebbarer Eingriffsbuchsen (44, 46, 56; 44, 46, 56, 58; 144, 146, 156, 158), deren jede eingerichtet ist zum Verbinden jedes Mal eines mit einem gegebenen Gang korrespondierenden betriebenen Zahnrads (36, 38, 40, 42, 50, 52; 136, 138, 140, 142, 150, 152) zur Drehung mit der jeweiligen sekundären Welle (16, 18; 116, 118), und eine korrespondierende Anzahl verschiebbarer Schaltgabeln (66, 68, 70, 72), deren jede eingerichtet ist zum Veranlassen einer jeweiligen Eingriffsbuchse (44, 46, 56; 44, 46, 56, 58; 144, 146, 156, 158), sich zwischen einer neutralen Position und wenigstens einer Schaltposition zu verschieben, **dadurch gekennzeichnet, dass** die Gangschalteinrichtung weiter aufweist eine Drehtrommel (60; 160), die auf ihrer äußeren zylindrischen Oberfläche eine korrespondierende Anzahl von Führungsnuten (61, 62, 63, 64; 161, 162, 163, 164) aufweist, in deren jede ein jeweiliger Bolzen (65, 67, 69, 71; 165, 167, 169, 171) verschiebbar eingreift, welcher Bolzen starr verbunden ist zur Verschiebung mit einer jeweiligen Schaltgabel (66, 68, 70, 72) in der Verschieberichtung dieser letzteren, und eine Betätigungseinheit, die eingerichtet ist zum Veranlassen der Trommel (60; 160), sich zwischen einer Anzahl von Winkelpositionen (R, R/II, N, I/II, II/III, III/IV, IV/V, IV/VI, VI; R/II, I, I/II, II/III, III/IV, IV/V, V/VI), von denen jede mit vorbestimmten Positionen der Eingriffsbuchsen (44, 46, 56; 44, 46, 56, 58; 144, 146, 156, 158) korrespondiert, schrittweise zu drehen, und
dass die Führungsnuten (61, 62, 63, 64; 161, 162, 163, 164) der Trommel (60; 160) ausgebildet sind derart, dass in einer ersten Winkelposition (R/II) der Anzahl von Winkelpositionen (R, R/II, N, I/II, II/III, III/IV, IV/V, IV/VI, VI; R/II, I, I/II, II/III, III/IV, IV/V, V/VI) die Eingriffsbuchsen (44, 46, 56; 44, 46, 56, 58; 144, 146, 156, 158) so positioniert sind, dass sie gleichzeitig in den zweiten Gang (II) und den Rückwärtsgang (R) eingreifen, und in einer zweiten Winkelposition (R) der Anzahl von Winkelpositionen (R, R/II, N, I; II, II/III, III/IV, IV/V, IV/VI, VI, R/II, I, I/II, II/III, III/IV, IV/V, V/VI) unmittelbar neben der ersten Winkelposition (R/II) die Eingriffsbuchsen (44, 46, 56; 44, 46, 56, 58) so positioniert sind, dass sie nur in den Rückwärtsgang (R) eingreifen.

2. Kraftfahrzeug-Hybridantriebssystem nach Anspruch 1, wobei das Getriebe (10) fünf Vorwärtsgänge (I, II, III, IV, V) und einen Rückwärtsgang (R) aufweist, und wobei die Anzahl von Eingriffsbuchsen (44, 46, 56) aufweist eine erste Eingriffsbuchse (44), eingerichtet zum selektiven Einlegen des ersten Gangs (I) oder des fünften Gangs (V), eine zweite Eingriffsbuchse (46), eingerichtet zum selektiven Einlegen des zweiten Gangs (II) oder des vierten Gangs (IV), und eine dritte Eingriffsbuchse (56), eingerichtet zum selektiven Einlegen des dritten Gangs (III) oder des Rückwärtsgangs (R).

3. Kraftfahrzeug-Hybridantriebssystem nach Anspruch 2, wobei das Getriebe (10) auch einen sechsten Vorwärtsgang (VI) aufweist, und wobei die Anzahl von Eingriffsbuchsen (44, 46, 56, 58) weiter aufweist eine vierte Eingriffsbuchse (58), eingerichtet zum Einlegen des sechsten Gangs (VI).

4. Kraftfahrzeug-Hybridantriebssystem nach Anspruch 1, wobei das Getriebe (10) sechs Vorwärtsgänge (I, II, III, IV, V, VI) und einen Rückwärtsgang (R) aufweist, und wobei die Anzahl von Eingriffsbuchsen (144, 146, 156, 158) aufweist eine erste Eingriffsbuchse (144), eingerichtet zum selektiven Einlegen des ersten Gangs (I) oder des fünften Gangs (V), eine zweite Eingriffsbuchse (146), eingerichtet zum selektiven Einlegen des zweiten Gangs (II) oder des sechsten Gangs (VI), eine dritte Eingriffsbuchse (156), eingerichtet zum selektiven Einlegen des vierten Gangs (IV) oder des Rückwärtsgangs (R), und eine vierte Eingriffsbuchse (158), eingerichtet zum Einlegen des dritten Gangs (III).

5. Kraftfahrzeug-Hybridantriebssystem nach einem der vorhergehenden Ansprüche, wobei die elektrische Maschine (80; 180) mit der zweiten primären Welle (14; 114) permanent kinematisch verbunden ist über einen Getriebezug (84, 86, 30; 184, 186, 130), der ein von einer Ausgangswelle (82, 182) der elektrischen Maschine (80; 180) getragenes Ritzel (84; 184), wenigstens ein Zwischenzahnrad (86; 186) und eines (30; 130) der von der zweiten primären Welle (14; 114) getragenen betriebenen Zahnräder (28, 30; 124, 130) aufweist.

6. Kraftfahrzeug-Hybridantriebssystem nach Anspruch 5, wobei das betriebene Zahnrad (30; 130) des Getriebezugs (84, 86, 30; 184; 186, 130) dem zweiten Gang (II) zugeordnet ist.

## Revendications

1. Système de propulsion hybride de véhicule à moteur, comportant un moteur à combustion interne, une machine électrique (80 ; 180) et une transmission à double-embrayage,
dans lequel la transmission à double-embrayage comporte une boîte de vitesses mécanique (10 ; 110) avec au moins cinq pignons de marche avant (I, II, III, IV, V ; I, II, III, IV, V, VI) et un pignon de marche arrière (R), dans lequel la boîte de vitesses (10 ; 110) comportant un premier arbre principal (12 ; 112) supportant des roues dentées d'entraînement (20, 22, 24 ; 120, 122) associées aux pignons impairs (I, III, V) et au pignon de marche arrière (R), un deuxième arbre principal (14 ; 114) coaxial au premier arbre principal (12 ; 112) et supportant des roues dentées d'entraînement (28, 30 ; 124, 130) associées au moins au deuxième pignon (II) et au quatrième pignon (IV), et au moins un arbre secondaire (16, 18 ; 116, 118) supportant une pluralité de roues dentées entraînées folles (36, 38, 40, 42, 50, 52 ; 136, 138, 140, 142, 150, 152) directement ou indirectement en prise avec les roues dentées d'entraînement (20, 22, 24, 28, 30 ; 120, 122, 124, 130) supportées par les deux arbres principaux (12, 14 ; 112 ; 114), la machine électrique (80 ; 180) étant en permanence reliée de manière cinétique au deuxième arbre principal (14 ; 114), la boîte de vitesses (10 ; 110) étant également pourvue d'un dispositif de changement de vitesse comportant une pluralité de manchons d'engagement coulissants (44, 46, 56 ; 44, 46, 56, 58 ; 144, 146, 156, 158), chacun prévu pour relier à chaque fois une roue dentée entraînée (36, 38, 40, 42, 50, 52 ; 136, 138, 140, 142, 150, 152) correspondant à une vitesse donnée pour rotation avec l'arbre secondaire respectif (16, 18 ; 116, 118), et une pluralité correspondante de fourchettes de changement de vitesse coulissantes (66, 68, 70, 72), chacune prévue pour amener un manchon d'engagement respectif (44, 46, 56 ; 44, 46, 56, 58 ; 144, 146, 156, 158) à coulisser entre une position de point mort et au moins une position de changement de vitesse, **caractérisé en ce que** le dispositif de changement de vitesse comporte en outre un tambour rotatif (60 ; 160) ayant sur sa surface cylindrique extérieure une pluralité correspondante de rainures de guidage (61, 62, 63, 64 ; 161, 162, 163, 164) dans chacune desquelles un doigt respectif (65, 67, 69, 71 ; 165, 167, 169, 171) s'engage de façon coulissante, lequel doigt est relié rigidement pour translation à une fourchette de changement de vitesse respective (66, 68, 70, 72) dans la direction de coulissement de cette dernière, et une unité d'actionnement prévue pour amener le tambour (60 ; 160) à tourner pas à pas parmi une pluralité de positions angulaires (R, R/II, N, I/II, II/III, III/IV, IV/V, IV/VI, VI ; R/II, I, I/II, II/III, III/IV, IV/V, V/VI) correspondant chacune à des positions prédéterminées des manchons d'engagement (44, 46, 56 ; 44, 46, 56, 58 ; 144, 146, 156, 158), et
**en ce que** les rainures de guidage (61, 62, 63, 64 ; 161, 162, 163, 164) du tambour (60 ; 160) sont formées d'une manière telle que dans une première position angulaire (R/II) de ladite pluralité de positions angulaires (R, R/II, N, I/II, II/III, III/IV, IV/V, IV/VI, VI ; R/II, I, I/II, II/III, III/IV, IV/V, V/VI) les manchons d'engagement (44, 46, 56 ; 44, 46, 56, 58 ; 144, 146, 156, 158) sont positionnés de façon à engager en même temps le deuxième pignon (II) et le pignon de marche arrière (R), et dans une deuxième position angulaire (R) de ladite pluralité de positions angulaires (R, R/II, N, I/II, II/III, III/IV, IV/V, IV/VI, VI ; R/II, I, I/II, II/III, III/IV, IV/V, V/VI) immédiatement adjacente à la première position angulaire (R/II) les manchons d'engagement (44, 46, 56 ; 44, 46, 56, 58) sont positionnés de façon à engager seulement le pignon de marche arrière (R).

2. Système de propulsion hybride de véhicule à moteur selon la revendication 1, dans lequel la boîte de vitesses (10) a cinq pignons de marche avant (I, II, III, IV, V) et un pignon de marche arrière (R) et dans lequel ladite pluralité de manchons d'engagement (44, 46, 56) comporte un premier manchon d'engagement (44) prévu pour engager de manière sélective le premier pignon (I) ou le cinquième pignon (V), un deuxième manchon d'engagement (46) prévu pour engager de manière sélective le deuxième pignon (II) ou le quatrième pignon (IV), et un troisième manchon d'engagement (56) prévu pour engager de manière sélective le troisième pignon (III) ou le pignon de marche arrière (R).

3. Système de propulsion hybride de véhicule à moteur selon la revendication 2, dans lequel la boîte de vitesses (10) a également un sixième pignon de marche avant (VI) et ladite pluralité de manchons d'engagement (44, 46, 56, 58) comporte en outre un quatrième manchon d'engagement (58) prévu pour engager le sixième pignon (VI).

4. Système de propulsion hybride de véhicule à moteur selon la revendication 1, dans lequel la boîte de vitesses (10) a six pignons de marche avant (I, II, III, IV, V, VI) et un pignon de marche arrière (R) et dans lequel ladite pluralité de manchons d'engagement (144, 146, 156, 158) comporte un premier manchon d'engagement (144) prévu pour engager de manière sélective le premier pignon (I) ou le cinquième pignon (V), un deuxième manchon d'engagement (146) prévu pour engager de manière sélective le deuxième pignon (II) ou le sixième pignon (VI), un troisième manchon d'engagement (156) prévu pour engager de manière sélective le quatrième pignon (IV) ou le pignon de marche arrière (R), et un quatrième manchon d'engagement (158) prévu pour engager le troisième pignon (III).

5. Système de propulsion hybride de véhicule à moteur selon l'une quelconque des revendications précédentes, dans lequel la machine électrique (80 ; 180) est reliée en permanence de manière cinétique au deuxième arbre principal (14 ; 114) par l'intermédiaire d'un train d'engrenages (84, 86, 30 ; 184, 186, 130) comprenant un pignon (84 ; 184) supporté par un arbre de sortie (82 ; 182) de la machine électrique (80 ; 180), au moins une roue dentée intermédiaire (86 ; 186) et une (30 ; 130) des roues dentées d'entraînement (28, 30 ; 124, 130) supportées par le deuxième arbre principal (14 ; 114).

6. Système de propulsion hybride de véhicule à moteur selon la revendication 5, dans lequel la roue dentée d'entraînement (30 ; 130) dudit train d'engrenages (84, 86, 30 ; 184, 186, 130) est associée au deuxième pignon (II).
